(19) Europäisches Patentamt
European Patent Office
Office européen des brevets

(11) Publication number: 0 036 052
B2

(12) NEW EUROPEAN PATENT SPECIFICATION

(45) Date of publication of the new patent specification: 27.12.89

(51) Int. Cl.[4]: C 04 B 35/46

(21) Application number: 80302077.5

(22) Date of filling: 19.06.80

# (54) Honeycomb structure for use as a catalyst support for automobile exhaust.

(30) Priority: 19.03.80 JP 33897/80

(43) Date of publication of application: 23.09.81 Bulletin 81/38

(45) Publication of the grant of the patent: 27.07.83 Bulletin 83/30

(45) Mention of the opposition decision: 27.12.89 Bulletin 89/52

(84) Designated Contracting States: BE DE FR GB IT NL SE

(56) References cited:
DD-A-29 794
DE-A-2 447 787
DE-A-2 750 290
DE-B-1 238 376
DE-B-2 341 325
FR-A-1 565 857
US-A-2 776 896
US-A-3 990 902

H. Walter, Silikattechnik 21(1970), Vol.9, pp.304-306;
Phase Diagrams for Ceramists, The American Ceramic Society, 1964,2nd Ed. 1969, p. 247, Fig.714;
Berezhnoi et al., Ukrain. Chem..Zhuz. 162 (1955),p.158;
Journal of the American Ceramic Society, Vol. 41, No.6 (1958),pp.189-195;
Trans. J. Brit. Ceram. Soc. 5(1972), pp.215-220;
WADC Technical report 53-165, N.R. Thielke (1953);
Keramische Massen auf der Basis von

(73) Proprietor: NGK INSULATORS, LTD., 2-56, Suda-cho, Mizuho- ku, Nagoya- shi, Aichi 467 (JP)

(72) Inventor: Oda, Isao, No.19, 3-chome, Gokuraku Meito- Ku, Nagoya City (JP)
Inventor: Matsuhisa, Tadaaki, No.2878- 678- 77, Aza-Kuroishi Ohaza- Hirabari, Tenpaku- Cho Tenpaku-Ku Nagoya City (JP)

(74) Representative: Paget, Hugh Charles Edward, MEWBURN ELLIS & CO. 2/3 Cursitor Street, London EC4A 1BQ (GB)

(56) References cited: (continuation)
Aluminiumtitanat, Tonindustrie Zeitung, vol. 98 (1974), No.12,pp.315-318;



LIBER, STOCKHOLM 1989

**Description**

Honeycomb structure for use as a catalyst support for automobile Exhaust.

This invention relates honeycomb structures use as catalyst supports, made of low-expansion ceramic materials having a low coefficient of thermal expansion and good thermal shock resistance and heat resistance. The catalyst support are for catalytic purifying apparatus for automobile exhaust.

With the progress of technology in recent years, the demand for materials having good thermal shock resistance and good heat resistance is increasing. The thermal shock resistance of ceramic materials depends on various characteristics of the materials, such as their coefficient of thermal expansion, their heat conductivity, their mechanical strength, their Young's modulus, and their Poisson's ratio. The thermal shock resistance is also affected by the size and shape into which the ceramics are formed and the conditions of heating and cooling or the rate of heat propagation. Among the factors affecting the thermal shock resistance, the contribution of the coefficient of thermal expansion is especially large, and when the rate of heat propagation is high, the thermal shock resistance is determined almost entirely by the coefficient of thermal expansion, as is well known to those skilled in the art. Accordingly, there is demand for low-expansion materials having good resistance to thermal shock.

Known ceramics having a comparatively low thermal expansion, i.e. having a coefficient of thermal expansion of the order of 5 to 20 x $10^{-7}$ (1/°C) in the temperature range 25°C to 800°C, are cordierite (MAS) and lithium-aluminium-silicate (LAS). However, such known ceramics have a comparatively low melting point, for example the melting point of cordierite is 1 450°C and that of lithium-aluminium-silicate is 1 423°C. Thus, for example when ceramics are used to make ceramic honeycombs for use as catalyst substrates or supports in catalytic purifying apparatus for automobiles, even the honeycomb substrates made of cordierite, with a high melting point, have been found vulnerable to plugging due to melting if the temperature of the catalyst bed is increased by 100°C to 200°C over that of conventional catalyst beds. This increase of the temperature of the catalyst bed is caused by altering the position at which the catalytic converter is mounted from the conventional location of under the chassis to close to the engine in order to improve the purifying efficiency of the catalyst or by design modifications involving the use of a turbo-charger to improve the fuel economy and engine output, which modifications cause an increase in the exhaust gas temperature as compared with that of conventional apparatus. Accordingly, the development of low-expansion materials having good heat resistance, which also have good thermal shock resistance equivalent to or better than that of cordierite, is required.

It has now been found, in accordance with the present invention, that ceramic materials for such honeycomb structures, having low-expansion characteristics equivalent to or better than those of cordierite, may be provided by incorporating titanium dioxide ($TiO_2$) in spinel ($MgO_2.Al_2O_3$), well known as a high melting point material, without causing any sizeable reduction of the melting point thereof. This is illustrated in the accompanying drawing which is a graph showing the effects of the amount of titania ($TiO_2$) in ceramics of the magnesium-aluminium-titanium system ($MgO.Al_2O_3—TiO_2$) on the melting point and the coefficient of thermal expansion thereof, in the drawing, curve A represents the relationship between the amount of titania ($TiO_2$) and the melting point of the ceramics while curve B represents the relationship between the amount of titania ($TiO_2$) and the coefficient of thermal expansion of the ceramics in the range 25°C to 800°C.

According to the present invention there is provided a honeycomb structure as set out in claim 1.

In this specification, titanium is assumed to be quadrivalent, even though it is able to form non-stoichiometric composition with oxide.

The chemical composition of the ceramics material used in the invention is such that it contains from 2 to 20 % by weight of magnesia, 10 to 68 % by weight of alumina, and from 30 to 80 % by weight of titanium oxide (calculated as titanium dioxide) since this range of chemical composition provides a magnesium-aluminium-titanate phase, the major component of the crystalline phase of which may be represented by the formula:

$$Mg_{10x}Al_{8y}Ti_{5(l-x-y)}O_{(10+2y)}$$

(in which *x* is from 0.02 to 0.20, y is from 0.10 to 0.68 and the total *x* and *y* is from 0.20 to 0.70) and provides low-expansion ceramic materials having good heat resistance and having a coefficient of the expansion of not more than 20 x $10^{-7}$ (1/°C) in the temperature range 25°C to 800°C and a melting point of 1 500°C or higher, as can be seen from the drawing. Preferably the chemical composition of the material is such that it consists of from 3 to 17 % by weight of magnesia, 15 to 62 % by weight of alumina, and 35 to 75 % by weight of titanium oxide (calculated as titanium dioxide), which range of the chemical composition provides a low-expansion magnesium-aluminium-titanate phase having a major component of the crystalline phase thereof which may be represented by the formula:

$$Mg_{10x'}Al_{8y'}Ti_{5(1-x'-y')}O_{(10+2y')}.$$

(in which *x'* is from 0.03 to 0.17, *y'* is from 0.15 to 0.62 and the total of *x'* and *y'* is from 0.25 to 0.65).

Chemical compositions outside the aforesaid range produce increased amounts of other crystalline phases having a larger thermal expansion than that of the magnesium-aluminium-titanate phase, and produce a coefficient of thermal expansion of greater than 20 x $10^{-7}$ (1/°C) and a lower thermal shock resistance. If the content of magnesia is greater than 20 % by weight, the melting point becomes too low.

The ceramic material used in the invention contains one or more crystalline phase, other than the magnesium-aluminium-titanate phase, specifically 0.5 to 20 % by weight of rutile, spinel, and/or corundum crystalline phases. The presence of such other crystals in the magnesium-aluminium-titanate phase makes it possible to obtain materials having a higher softening temperature and a higher melting temperature than those comprising the magnesium-aluminium-titanate alone without adversely affecting the low-expansion characteristics inherent in the magnesium-aluminium-titanate phase. Accordingly, the gradient of the softening-shrinkage curve from the softening temperature to the melting temperature is reduced, and the heat-resistance is improved. Furthermore, the strength of the low-expansion ceramics comprising magnesium-aluminium-titanate alonge can be improved by the presence of such other crystals.

The presence of not more than 20 % by weight of rutile, spinel, and/or corundum crystals, improves the strength without adversely affecting the low expansion characteristics of the material. If the amount of such other crystal phases exceeds 20 % by weight, the coefficient of thermal expansion will become greater than 20 x $10^{-7}$ (1/°C) in the temperature range 25°C to 800°C and the thermal shock-resistance will be reduced.

The honeycomb structures of the invention are produced by first forming a batch consisting of magnesia or precursor therefor, alumina or precursor therefor and titanium oxide or precursor therefor in amounts such that the batch contains from 2 to 20 %, preferably from 2 to 17 %, by weight of magnesia (calculated as MgO), from 10 to 68 %, preferably from 15 to 62 %, by weight of alumina (calculated as $Al_2O_3$) and from 30 to 80 % by weight, preferably from 35 to 75 % by weight, of titanium oxide (calculated as titanium dioxide). If necessary, a plasticizer and/or binder is added to the thus formed batch to obtain a batch which is shapable in a plastic manner, and the batch is shaped by a ceramic forming process such as extrusion. The shaped body is then dried. The dried body is then heated by increasing its temperature at a rate of 5°C/hour to 300°C/hour and fired at 1 300°C to for 1 700°C for 0.5 to 48 hours.

The magnesia producing component of the batch may for example be magnesia, magnesium hydroxide or magnesium carbonate; the alumina producing component may for example be alumina or aluminium hydroxide; and the titanium oxide producing component may for example be rutile type titanium dioxide or anatase titanium dioxide.

The starting materials for the ceramics used in the present invention are not restricted to the above artificial substances, but various natural materials having essentially the same chemical composition can be also used for producing the low-expansion ceramics. In this case, impurities other than the major components of the chemical composition, i.e., magnesia (MgO), alumina ($Al_2O_3$), and titania ($TiO_1$), should generally be not more than about 5 % by weight.

The honeycomb structure of the invention is a body having a thin walled matrix with a plurality of cells extending from one end to the other of the body, and the cells of the honeycomb body may be of any geometrical form in cross-section such as triangular, rectangular, hexagonal, any other polygonal, circular, or a combination thereof.

In order that the invention may be well understood the following examples are given by way of illustration only.

Mixtures of raw materials having the composition given in Table 1 below were made up.

**Table 1**

Raw materials (% by weight)

| Ex. | MgO | $Mg(OH)_2$ | $MgCO_3$ | $Al_2O_3$ | $Al(OH)_3$ | Rutile | Anatase |
|---|---|---|---|---|---|---|---|
| 1 | - | 5.5 | - | - | 37.5 | - | 56.8 |
| 2 | 6.2 | - | - | 40.1 | - | 53.7 | - |
| 3 | - | 12.5 | - | - | 24.0 | - | 63.5 |
| 4 | 9.3 | - | - | 27.3 | - | 63.4 | - |
| 5 | - | - | 20.0 | 29.0 | - | - | 51.0 |
| 6 | - | - | 14.5 | - | 50.4 | - | 35.1 |
| 7 | - | 19.7 | - | - | 25.2 | 55.1 | - |
| 8 | - | 22,0 | - | 31.2 | - | - | 46.8 |
| C1 | 1.1 | - | - | 28.3 | - | 70.6 | - |
| C2 | - | 11.6 | - | - | 13.9 | - | 74.5 |
| C3 | - | - | 48.0 | 14.8 | - | - | 37.2 |

Notes:
C = comparative example
MgO = magnesia
$Mg(OH)_2$ = magnesium hydroxide
$MgCO_3$ = magnesium carbonate
$Al_2O_3$ = alumina
$Al(OH)_3$ = aluminium hydroxide
Rutile = rutile type titanium dioxide
Anatase = anatase type titanium dioxide

Two parts by weight of a vinyl acetate based binder were added to 100 parts by weight of each mixture and the binder was thoroughly mixed with the mixture. Rod-shaped test pieces 10 mm x 10 mm x 80 mm, were then made from the binder-containing mixtures by pressing.

Separately, honeycomb-shaped bodies with a square cell cross section were prepared, by adding 4 parts by weight of methyl cellulose and 30 to 40 parts by weight of water to 100 parts by weight of each mixture, thoroughly kneading the mixture thus formed in a kneader, extruding the kneaded mixture into a honeycomb shape by means of an extrusion machine, and drying the extruded goods.

The rod-shaped test pieces and the honeycomb-shaped bodies were then fired under the firing conditions shown in Table 2, in which is also shown the composition of the ceramics in terms of MgO, $Al_2O_3$ and $TiO_2$.

**Table 2**

| | Firing conditions | | Composition of ceramic wt. % | | |
|---|---|---|---|---|---|
| Example | Temperature °C | Time (hours) | MgO | $Al_2O_3$ | $TiO_2$ |
| 1 | 1600 | 5 | 4.0 | 29.0 | 67.0 |
| 2 | 1600 | 3 | 6.0 | 41.0 | 53.0 |
| 3 | 1500 | 10 | 9.0 | 18.0 | 73.0 |
| 4 | 1550 | 5 | 9.0 | 28.0 | 63.0 |
| 5 | 1550 | 10 | 10.4 | 32.5 | 57.1 |
| 6 | 1550 | 10 | 9.0 | 44.0 | 47.0 |
| 7 | 1400 | 5 | 15.0 | 20.0 | 65.0 |
| 8 | 1500 | 5 | 15.0 | 34.0 | 51.0 |
| C1 | 1400 | 10 | 1.0 | 29.0 | 70.0 |
| C2 | 1550 | 5 | 8.0 | 10.0 | 82.0 |
| C3 | 1450 | 5 | 30.0 | 20.0 | 50.0 |

Similar rod shaped test pieces and honeycomb ceramics were also prepared from a conventional cordierite ceramic (MgO, 13.8 % by weight; $Al_2O_3$, 34.9 % by weight; $SiO_2$, 51.3 % by weight) and these will be referred to as comparative example 4 (C4).

The coefficients of thermal expansion, in the range of 25°C to 800°C, and the melting points of the rod-shaped test pieces were measured. The amounts of secondary crystalline phases other than the major crystalline magnesium-aluminium-titanate phase were determined by X-ray diffraction. Thermal shock tests were applied to the honeycomb-shaped bodies (100 mm diameter by 75 mm long) by an electric furnace, and the withstanding temperature differences for quick heating and quick cooling without cracks or breakage were determined.

The results are shown in Table 3.

**Table 3**

Properties of ceramics

| Example | CTE $\times 10^{-7}$ (1/°C) | m.p (°C) | STD (°C) | Secondary crystals (% by weight) Rutile | Spinel | Corundum |
|---|---|---|---|---|---|---|
| 1 | 12 | 1740 | 750 | 2.5 | - | - |
| 2 | 2 | 1700 | 1200 | 1.0 | 0.5 | - |
| 3 | 14 | 1650 | 650 | 5.0 | - | - |
| 4 | 10 | 1630 | 800 | 0.5 | - | - |
| 5 | 7 | 1610 | 900 | - | 0.7 | - |
| 6 | 8 | 1620 | 850 | - | 1.2 | 1.0 |
| 7 | 19 | 1570 | 550 | 2.0 | 3.5 | 0.5 |
| 8 | 15 | 1550 | 600 | - | 7.5 | 1.5 |
| C1 | 26 | 1720 | 400 | 10.0 | - | - |
| C2 | 31 | 1600 | 380 | 31.5 | - | - |
| C3 | 60 | 1490 | 250 | 5.0 | 25.0 | - |
| C4 | 19 | 1450 | 500 | - | - | - |

Notes: CTE = Coefficient of thermal expansion (25°C to 800°C)
m.p. = melting point
STD = Temperature difference withstood on quick heating and cooling

The ceramics of Examples 1 - 8 (chemical composition: 2 - 20 % by weight magnesia; 10 - 68 % by weight alumina: 30 - 80 % by weight titania) had coefficients of thermal expansion of less than 20 x $10^{-7}$ (1/°C) in the range 25°C to 800°C, so that they showed larger withstanding temperature differences on quick heating and quick cooling than those of comparative examples 1 - 3 having chemical compositions outside those of the present invention, as demonstrated by the thermal shock tests in the electric furnace. Thus, the ceramics of the invention had good thermal shock resistance.

Furthermore, the low-expansion ceramics of the invention had melting points about 100°C to 300°C higher than the melting point, 1 450°C, of the cordierite ceramic of comparative example 4.

As described above, the low-expansion ceramic materials used in the honeycomb structures of the invention have a magnesium-aluminium-titanate phase as the major component of its crystalline phase, so that the ceramics have a low coefficient of thermal expansion and a high melting point.

## Claims

1. A honeycomb structure for use as a catalyst support in catalytic purifying apparatus for automobil exhaust, formed of a low-expansion ceramic material having a chemical composition consisting essentially of from 2 to 20 % by weight of magnesia, from 10 to 68 % by weight of alumina and 30 to 80 % by weight of titanium oxide (calculated as titanium dioxide), the major component of the crystalline phase of the ceramic material being a magnesium-aluminium-titanate phase and the ceramic material further containing from 0.5 to 20 % by weight of one or more of rutile, spinel and corundum crystals, and the ceramic material having a coefficient of thermal expansion of not more than 20 x $10^{-7}$ (1/°C) in the temperature range of 25°C to 800°C and a melting point of not less than 1 500°C.

2. A honeycomb structure as claimed in claim 1 in which the magnesium-aluminium-titanate phase forming the major component of the crystalline phase has the formula

$$Mg_{10x}Al_{8y}Ti_{5(1-x-y)}O_{(10+2y)}$$

(in which x is from 0.02 to 0.20, y is from 0.10 to 0.68 and the total of x and y is from 0.20 to 0.70).

3. A honeycomb structure as claimed in claim 1 having a chemical composition consisting essentially of from 3 to 17 % by weight of magnesia, from 15 to 62 % by weight of alumina, and 35 to 75 % by weight of titanium oxide (calculated as titanium dioxide).

4. A honeycomb structure as claimed in claim 3 wherein the magnesium-aluminium-titanate phase forming the major component of the crystalline phase has the formula

$$Mg_{10x'}Al_{8y'}Ti_{5(1-x'-y')}O_{(10+2y')}$$

(in which x' is from 0.03 to 0.17, y' is from 0.15 to 0.62 and the total of x' and y' is from 0.25 to 0.65).

## Patentansprüche

1. Ronigwabenstruktur für die Verwendung als Katalysatorträger in einer katalytischen Reinigungsvorrichtung für Automobilabgase, gebildet aus einem keramischen Material mit niedriger Ausdehnung mit einer chemischen Zusammensetzung von im wesentlichen 2 bis 20 Gew.-% Magnesiumoxid, 10 bis 68 Gew.-% Aluminiumoxid und 30 bis 80 Gew.-% Titanoxid (berechnet als Titandioxid); wobei die Hauptkomponente der kristallinen Phase des keramischen Materials als Magnesium-Aluminium-Titanatphase vorliegt, und das Keramikmaterial weiterhin 0,5 bis 20 Gew.-% Rutil-, Spinel- und/oder Korundkristalle enthält und das Keramikmaterial einen thermischen Ausdehnungskoeffizienten von nicht mehr als 20 x $10^{-7}$ (1/°C) im Temperaturbereich von 25 bis 800°C und einen. Schmelzpunkt von nicht weniger als 1 500°C aufweist.

2. Honigwabenstruktur gemäß Anspruch 1, bei dem die Magnesium-Aluminium-Titanatphase, welche die Hauptkomponente der kristallinen Phase bildet, die Formel

$$Mg_{10x}Al_{8y}Ti_{5(1-x-y)}O_{(10+2y)}$$

(worin x 0,02 bis 0,20, y 0,10 bis 0,68 und die Summe von x und y 0,20 bis 0,70 bedeuten) hat.

3. Honigwabenstruktur gemäß Anspruch 1 mit einer chemischen Zusammensetzung, die im wesentlichen aus 3 bis 17 Gew.-% Magnesiumoxid, 15 bis 62 Gew.-% Aluminiumoxid und 35 bis 75 Gew.-% Titanoxid (berechnet als Titandioxid) besteht.

4. Honigwabenstruktur gemäß Anspruch 3, worin die Magnesium-Aluminium-Titanatphase, welche die Hauptkomponente der kristallinen Phase bildet, die Formel

$Mg_{10x'}Al_{8y'}Ti_{5(-x'-y')}O_{(10 + 2y')}$

(in welcher x' 0,03 bis 0,17, y' 0,15 bis 0,62 und die Summe von x' und y' 0,25 bis 0,65 bedeuten) hat.

**Revendications**

1. Structure en nid d'abeilles pour utilisation comme support de catalyseur dans un appareil de purification catalytique pour échappement d'automobiles, formée d'un matériau céramique à faible dilatation possèdant une composition chimique consistant essentiellement en 2 à 20 % en poids de magnésie, 10 à 68 % en poids d'alumine et 30 à 80 % en poids d'oxyde de titane (calculé en dioxyde de titane), le constituant principal de la phase cristalline du matériau céramique étant une phase titanate de magnésium et d'aluminium et le matériau céramique contenant de 0,5 à 20 % en poids de cristaux de rutile et/ou de spinelle et/ou de corundum et ledit matériau céramique possèdant un coefficient de dilatation thermique non supérieur à 20 x $10^{-7}$ (1/°C) dans le domaine de température de 25°C à 800°C et un point de fusion non inférieur à 1 500°C.

2. Structure en nid d'abeilles selon la revendication 1, dans laquelle la phase titanate de magnésium et d'aluminium formant le constituant majeur de la phase cristalline possède la formule

$Mg_{10x}Al_{8y}Ti_{5(1-x-y)}O_{(10 + 2y)}$

(dans laquelle *x* se situe dans la plage de 0,02 à 0,20, *y* se situe dans la plage de 0,10 à 0,68 et le total de *x* et *y* se situe dans la plage de 0,20 à 0,70).

3. Structure en nid d'abeilles selon la revendication 1, ayant une composition chimique consistant essentiellement en 3 à 17 % en poids de magnésie, 15 à 62 % en poids d'alumine et de 35 à 75 % en poids d'oxyde de titane (calculé en dioxyde de titane).

4. Structure en nid d'abeilles selon la revendiation 3, dans laquelle la phase titanate de magnésium et d'aluminium formant le constituant majeur de la phase cristalline possède la formule

$Mg_{10x'}Al_{8y'}Ti_{5(1-x'-y')}O_{(10 + 2y')}$

(dans laquelle *x'* se situe dans la plage de 0,03 à 0,17, *y'* se situe dans la plage de 0,15 à 0,62 et le total de *x'* et *y'* se situe dans la plage de 3,25 à 0,65).

FIG. 1

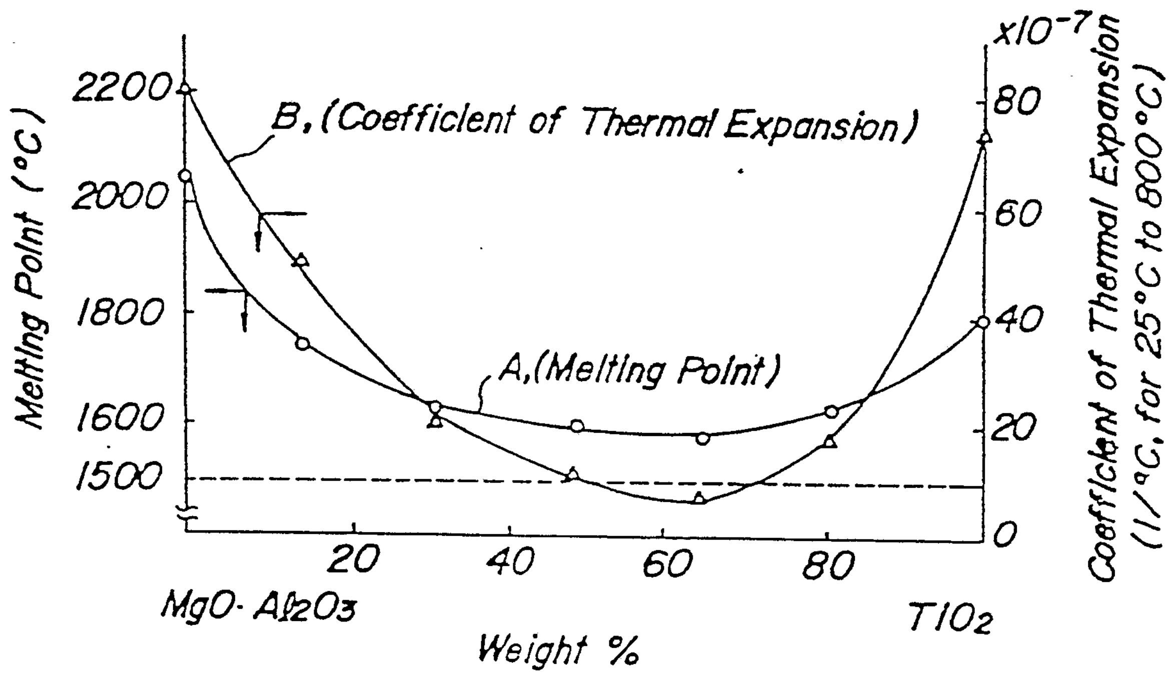
2200
2000
1800
1600
1500
Melting Point (°C)
B, (Coefficient of Thermal Expansion)
A, (Melting Point)
x10-7
80
60
40
20
0
Coefficient of Thermal Expansion
(1/°C, for 25°C to 800°C)
20
40
60
80
MgO·Al2O3
TiO2
Weight %